# EUROPÄISCHE PATENTANMELDUNG

(11) **EP 2 985 161 A1**
(43) Veröffentlichungstag der Anmeldung: **17.02.2016**
(21) Anmeldenummer: 14180688.5
(22) Anmeldetag: 12.08.2014
(51) Int. Cl.: B60J 5/04

(54) **Kraftfahrzeug**

(71) Anmelder: MAGNA STEYR Engineering AG & Co KG, 8041 Graz (AT)
(72) Erfinder: Dietz, Wolfgang, 8081 Pirching (AT); Linortner, Raimund, 8010 Graz (AT); Rossio, Daniele, 8020 Graz (AT)
(74) Vertreter: Rausch, Gabriele

(57) **Zusammenfassung**

Kraftfahrzeug umfassend eine Karosserie (1), ein erstes Türelement (2) und ein zweites Türelement (3), wobei das erste Türelement (2) eine erste Stirnseite (4) und eine zweite Stirnseite (5) aufweist und das zweite Türelement (3) eine dritte Stirnseite (6) und eine vierte Stirnseite (7) aufweist, wobei das erste Türelement (2) im Bereich der ersten Stirnseite (4) über zumindest ein erstes Verbindungselement mit der Karosserie (1) verbunden ist und das zweite Türelement (3) im Bereich der vierten Stirnseite (7) über zumindest ein zweites Verbindungselement (8) mit der Karosserie (1) verbunden ist, wobei das zweite Verbindungselement (8) an einer ersten Drehachse (9) an der Karosserie (1) des Kraftfahrzeugs drehbar gelagert ist und das zweite Türelement (3) an einer von der ersten Drehachse (9) verschiedenen zweiten Drehachse (10) am zweiten Verbindungselement (8) drehbar gelagert ist, wobei an der Karosserie (1) im Bereich der dritten Stirnseite (6) des zweiten Türelements (3) zumindest eine Führungsschiene (16) angeordnet ist, so dass beim Öffnen und/oder Schließen des zweiten Türelements (3) der Bereich der dritten Stirnseite (6) des zweiten Türelements (3) in der Führungsschiene (16) geführt ist.

## Beschreibung

### Gebiet der Erfindung

Die vorliegende Erfindung betrifft ein Kraftfahrzeug umfassend eine Karosserie, ein erstes Türelement und ein zweites Türelement, wobei das erste Türelement eine erste Stirnseite und eine zweite Stirnseite aufweist und das zweite Türelement eine dritte Stirnseite und eine vierte Stirnseite aufweist, wobei das erste Türelement im Bereich der ersten Stirnseite über zumindest ein erstes Verbindungselement mit der Karosserie verbunden ist und das zweite Türelement im Bereich der vierten Stirnseite über zumindest ein zweites Verbindungselement mit der Karosserie verbunden ist.

### Stand der Technik

Moderne Kraftfahrzeuge weisen unterschiedlichste Arten von Türanordnungen auf. Eines dieser vielen Designs stellen entgegengesetzte Türen an der Längsseite eines Kraftfahrzeugs dar. Entgegengesetzte Türanordnungen umfassen im Allgemeinen eine erste Tür und eine zweite Tür, wobei die erste und die zweite Tür üblicherweise in Längsrichtung zueinander benachbart an derselben Seite eines Kraftfahrzeugs angeordnet sind. Manchmal weisen derartige Türanordnungen keine B-Säule der Karosserie des Kraftfahrzeuges zwischen der ersten und zweiten Tür auf, was ein direktes Einrasten der ersten in die zweite Tür verlangt. Eine große Herausforderung stellt dabei das voneinander unabhängige Öffnen und Schließen der ersten und zweiten Tür dar. Die Dokumente DE 10 2011 110 904 A1 und US 2007/0152473 A1 versuchen dieses Problem durch spezielle Scharnierdesigns zu lösen.

Die Veröffentlichung DE 10 2011 110 904 A1 zeigt ein Kraftfahrzeug mit entgegengesetzt angelenkten Türen, wobei insbesondere die Scharnieranordnung für eine der beiden Türen beschrieben wird um ein voneinander unabhängiges Öffnen der ersten und der zweiten Tür zu ermöglichen.

Die US 2007/0152473 A1 offenbart ein Kraftfahrzeug mit einer B-Säulenlosen Karosserie und einer entgegengesetzten Türanordnung und einen Mechanismus für eine voneinander unabhängige Öffnung der beiden entgegengesetzten Türen. Der Öffnungsmechanismus wird durch zwei Bindeglieder (Scharniere) an entgegengesetzten Seiten einer Tür unterstützt.

### Zusammenfassung der Erfindung

Es ist eine Aufgabe der Erfindung ein Kraftfahrzeug mit entgegengesetzten Türelementen zu verbessern, insbesondere einen zuverlässigen und kostengünstigen Mechanismus zum Öffnen und/oder Schließen eines Türelements darzustellen.

Die Lösung der Aufgabe erfolgt durch ein Kraftfahrzeug umfassend eine Karosserie, ein erstes Türelement und ein zweites Türelement, wobei das erste Türelement eine erste Stirnseite und eine zweite Stirnseite aufweist und das zweite Türelement eine dritte Stirnseite und eine vierte Stirnseite aufweist, wobei das erste Türelement im Bereich der ersten Stirnseite über zumindest ein erstes Verbindungselement mit der Karosserie verbunden ist und das zweite Türelement im Bereich der vierten Stirnseite über zumindest ein zweites Verbindungselement mit der Karosserie verbunden ist, wobei das zweite Verbindungselement an einer ersten Drehachse an der Karosserie des Kraftfahrzeugs drehbar gelagert ist und das zweite Türelement an einer von der ersten Drehachse verschiedenen zweiten Drehachse am zweiten Verbindungselement drehbar gelagert ist, wobei an der Karosserie im Bereich der dritten Stirnseite des zweiten Türelements zumindest eine Führungsschiene angeordnet ist, so dass beim Öffnen und/oder Schließen des zweiten Türelements der Bereich der dritten Stirnseite des zweiten Türelements in der Führungsschiene geführt ist.

Das erfindungsgemäße Kraftfahrzeug umfasst eine Karosserie und zumindest ein erstes und ein zweites Türelement. Das erste Türelement weist eine erste Stirnseite und eine zweite Stirnseite auf, wobei das erste Türelement bevorzugt im Bereich der ersten Stirnseite über zumindest ein erstes Verbindungselement mit der Karosserie des Kraftfahrzeuges verbunden ist.

Das zweite Türelement weist eine dritte Stirnseite und eine vierte Stirnseite auf und ist unabhängig vom ersten Türelement über zumindest ein zweites Verbindungselement bevorzugt im Bereich der vierten Stirnseite mit der Karosserie des Kraftfahrzeugs verbunden. Das zweite Verbindungselement ist dabei an einer ersten Drehachse an der Karosserie des Kraftfahrzeugs drehbar gelagert und das zweite Türelement ist an einer von der ersten Drehachse verschiedenen zweiten Drehachse am zweiten Verbindungselement drehbar gelagert.

Die zweite Stirnseite des ersten Türelements und die dritte Stirnseite des zweiten Türelements treffen in einem Bereich der Karosserie des Kraftfahrzeugs aufeinander in dem üblicherweise eine B-Säule angeordnet ist. Die zweite und die dritte Stirnseite berühren sich dabei nicht unmittelbar. Das zweite Türelement wird beim Öffnen und/oder Schließen des zweiten Türelements in zumindest einer Führungsschiene geführt. Die zumindest eine Führungsschiene ist an der Karosserie ausgebildet und ermöglicht eine flexibel definierbare Bewegung entlang der Längsseite der Karosserie des Kraftfahrzeuges, insbesondere eine eng am Fahrzeug geführte Bewegung der dritten Stirnseite des zweiten Türelements beim Öffnen und/oder Schließen des zweiten Türelements. Die Bewegung wird hierbei durch die Geometrie der Führungsschiene bestimmt.

Weiterbildungen der Erfindung sind in den abhängigen Ansprüchen, der Beschreibung sowie den beigefügten Zeichnungen angegeben.

Das erste Türelement ist vorzugsweise im Bereich der ersten Stirnseite über das zumindest eine erste Verbindungselement mit der Karosserie verbunden. Dabei kann das erste Verbindungselement direkt an der ersten Stirnseite oder in der Nähe der ersten Stirnseite, insbesondere an der Ober- und/oder Unterkante und/oder Innen- und /oder Außenkante des ersten Türelements, angeordnet sein.

Das zweite Türelement ist bevorzugt im Bereich der vierten Stirnseite über das zumindest eine zweite Verbindungselement mit der Karosserie verbunden. Dabei kann das zweite Verbindungselement direkt an der vierten Stirnseite oder in der Nähe der vierten Stirnseite, insbesondere an der Ober- und/oder Unterkante und/oder Innen- und /oder Außenkante des zweiten Türelements, angeordnet sein.

Vorzugsweise ist die zumindest eine Führungsschiene im Bereich der dritten Stirnseite linear ausgebildet um eine platzsparende Führung des zweiten Türelements entlang der Längsseite der Karosserie des Kraftfahrzeugs zu gewährleisten. Es sind jedoch auch andere Geometrien der Führungsschiene, wie beispielsweise gebogen oder S-förmig, möglich.

Gemäß einer Ausführungsform der Erfindung ist das erste Türelement im Bereich der ersten Stirnseite über das erste Verbindungselement mit der A-Säule der Karosserie verbunden. Das zweite Türelement ist im Bereich der vierten Stirnseite über das zweite Verbindungselement bevorzugt mit der C-Säule der Karosserie verbunden.

Vorzugsweise weist die Karosserie des Kraftfahrzeugs keine B-Säule auf. Die zweite Stirnseite des ersten Türelements und die dritte Stirnseite des zweiten Türelements treffen im Bereich der sonst üblichen B-Säule der Karosserie des Kraftfahrzeugs aufeinander. Die zweite und die dritte Stirnseite berühren sich dabei nicht unmittelbar.

Um eine möglichst dichte und lösbare Verbindung zwischen der zweiten Stirnseite und der dritten Stirnseite zu erzielen ist erfindungsgemäß an der zweiten Stirnseite des ersten Türelements und/oder der dritten Stirnseite des zweiten Türelements zumindest eine vertikale Dichtung vorgesehen, bevorzugt zwei vertikale Dichtungen, wobei eine der Dichtungen nahe der Türaußenseite verläuft und die zweite nahe der Türinnenseite verläuft. Im B-Säulen Bereich berühren sich somit bevorzugt die Dichtungen an der zweiten und/oder dritten Stirnseite des ersten und/oder zweiten Türelements.

Darüber hinaus sind an der zweiten Stirnseite ein erster Fanghaken und an der dritten Stirnseite ein zweiter Fanghaken angeordnet. Diese Fanghaken können beispielsweise vertikal ausgerichtet sein. Dadurch wird eine Sicherheitssteigerung für die Kraftfahrzeug-Insassen im Falle eines Unfalls und/oder einem Einwirken einer Kraft von außen auf das erste und/oder zweite Türelement erreicht.

Bevorzugt ist das zweite Verbindungselement, das das zweite Türelement mit der Karosserie verbindet, U-förmig ausgeführt und durch eine erste Säule der Karosserie, insbesondere die C-Säule der Karosserie, des Kraftfahrzeuges geführt. Auch von der U-Form abweichende Geometrien, wie beispielsweise L-förmig oder geradlinig, sind möglich.

Im Bereich des Durchtritts des zweiten Verbindungselements durch die erste Säule der Karosserie ist das zweite Verbindungselement gelagert, wobei die Lagerung vorzugsweise durch ein Rollenlager oder ein Gleitlager erfolgt. Dies dient als Abstützung für das zweite Verbindungselement.

Das zweite Verbindungselement ist bevorzugt so gestaltet, dass bei Drehung des zweiten Verbindungselements um die erste Drehachse der radiale Abstand zwischen der ersten Drehachse und dem Durchtritt des zweiten Verbindungselements durch die erste Säule annähernd gleich bleibt.

Das zweite Verbindungselement ist erfindungsgemäß an einer ersten Drehachse an der Karosserie des Kraftfahrzeugs drehbar gelagert und das zweite Türelement ist an einer von der ersten Drehachse verschiedenen zweiten Drehachse am zweiten Verbindungselement drehbar gelagert, wobei die Drehung des zweiten Verbindungselements um die erste Drehachse und/oder die zweite Drehachse automatisiert, insbesondere mechanisch, hydraulisch, pneumatisch und/oder elektrisch, erfolgen kann.

Beim Öffnen des zweiten Türelements erfolgt zuerst eine Drehung des zweiten Verbindungselements um die erste Drehachse, wobei das zweite Türelement im Bereich der dritten Stirnseite in der zumindest einen Führungsschiene geführt wird. Nach der Drehung des zweiten Verbindungselements um die erste Drehachse erfolgt eine Drehung des zweiten Türelements um die zweite Drehachse.

Beim Schließen des zweiten Türelements erfolgt zuerst eine Drehung des zweiten Türelements um die zweite Drehachse. Nach Drehung des zweiten Türelements um die zweite Drehachse erfolgt eine Drehung des zweiten Verbindungselements um die erste Drehachse, wobei das zweite Türelement im Bereich der dritten Stirnseite in der zumindest einen Führungsschiene geführt wird.

Hierbei kann auch vorgesehen sein, dass beim Öffnen des zweiten Türelementes die Drehung um die erste Drehachse manuell erfolgt und beim Schließen die Drehung um die erste Drehachse automatisiert. Auch die umgekehrte Variante - ein automatisiertes Öffnen und ein manuelles Schließen - ist denkbar. Vorzugsweise erfolgt ein Öffnen und Schließen jedoch durch automatisierte Drehung um die erste Drehachse.

Die Drehung des zweiten Verbindungselements um die erste Drehachse erfolgt um einen Winkel von 20° bis 40°, vorzugsweise etwa 30°, wobei es zu einer Verschiebung des zweiten Türelements von 30 mm bis 70 mm, vorzugsweise 50 mm, in der zumindest einen Führungsschiene kommt.

Vorteilhafterweise rastet beim Schließen nach der Drehung des zweiten Türelements um die zweite Drehachse das zweite Türelement in die zumindest eine Führungsschiene ein.

In einer vorteilhaften Ausführungsform der vorliegenden Erfindung ist im Bereich der zumindest einen Führungsschiene zumindest ein Sensor angeordnet, der ein Eintreffen eines am zweiten Türelement vorgesehenen Einrastbolzens erkennt, um sodann beispielsweise das automatische Schließen zu starten.

Das Eintreffen des Einrastbolzens des zweiten Türelementes in die zumindest eine Führungsschiene kann erleichtert werden, wenn die Mündung der Führungsschiene im Querschnitt ausgeweitet ist, insbesondere eine trichterförmige Mündung aufweist.

Der Einrastbolzen ist bevorzugt im Bereich der dritten Stirnseite des zweiten Türelements angeordnet

Der Einrastbolzen des zweiten Türelements ist bevorzugt aus einem metallischen Material gefertigt.

Vorteilhafterweise ist am ausgeweiteten Querschnitt der Führungsschiene zumindest ein Einrastelement, insbesondere eine mechanische Einrastklappe, angeordnet, in das der Einrastbolzen des zweiten Türelements einrastet.

Beim Schließen des zweiten Türelements nach der Drehung des zweiten Verbindungselements um die erste Drehachse schließt das zweite Türelement mit der dritten Stirnseite im Bereich der zweiten Stirnseite des ersten Türelements, insbesondere über eine automatisierte, insbesondere elektronische Zuziehfunktion.

Die Drehung des zweiten Verbindungselements um die zweite Drehachse erfolgt um einen Winkel von 50° bis 100°, vorzugsweise 60° bis 90°. Da diese Bewegung bevorzugt manuell ausgeführt wird, ist es von Vorteil, wenn entlang dieser Bewegungsbahn im zweiten Verbindungselement 2-3 Rastpositionen vorgesehen sind, um die Tür an diesen Positionen definiert zu halten und so zu verhindern, dass sich die Tür selbstständig weiterbewegt.

In einer vorteilhaften Ausführungsform der vorliegenden Erfindung weist das zweite Türelement im Bereich der dritten Stirnseite zumindest ein Schloss auf.

In einer möglichen Ausführungsvariante weist die Karosserie im unteren Bereich der dritten Stirnseite die zumindest eine Führungsschiene auf und im oberen Bereich der zweiten und dritten Stirnseite das zumindest eine Schloss auf.

### Kurzbeschreibung der Zeichnungen

Die Erfindung wird im Folgenden beispielhaft unter Bezugnahme auf die Zeichnungen beschrieben.
- Fig. 1: zeigt eine schematische, fragmentarische Draufsicht des erfindungsgemäßen Kraftfahrzeugs in geschlossener Position der beiden Türelemente "erstes Türelement" und "zweites Türelement"
- Fig. 2: zeigt eine schematische Draufsicht der Verbindungsstelle des zweiten Türelements über das zweite Verbindungselement an die Karosserie
- Fig. 3: zeigt eine schematische Draufsicht des Bereichs der zweiten Stirnseite des ersten Türelements und der dritten Stirnseite des zweiten Türelements in geschlossener Position der beiden Türelemente "erstes Türelement" und "zweites Türelement"
- Fig. 4 - Fig. 7: zeigen eine schematische, fragmentarische Draufsicht des erfindungsgemäßen Kraftfahrzeugs und den Öffnungsmechanismus des zweiten Türelements
- Fig. 8 - Fig. 10: zeigen eine schematische, fragmentarische Draufsicht des erfindungsgemäßen Kraftfahrzeugs und den Öffnungsmechanismus des ersten Türelements
- Fig. 11 - Fig. 12: zeigen eine schematische, fragmentarische Draufsicht des erfindungsgemäßen Kraftfahrzeugs und beispielhafte Ausführungsformen von Führungsschienen

### Detaillierte Beschreibung der Erfindung

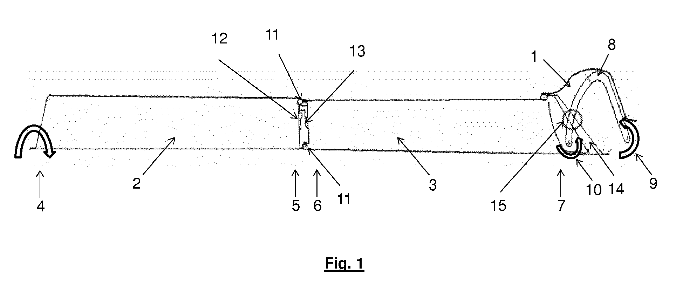

Fig. 1 zeigt eine schematische, fragmentarische Draufsicht des erfindungsgemäßen Kraftfahrzeugs, wobei sich das erste Türelement 2 und das zweite Türelement 3 in geschlossener Position befinden. Das erfindungsgemäße Kraftfahrzeug umfasst eine Karosserie 1 und zumindest ein erstes Türelement 2 und ein zweites Türelement 3. Das erste Türelement 2 weist eine erste Stirnseite 4 und eine zweite Stirnseite 5 auf, wobei das erste Türelement 2 im Bereich der ersten Stirnseite 4 über zumindest ein erstes Verbindungselement mit der Karosserie 1 des Kraftfahrzeuges verbunden ist.

Das zweite Türelement 3 weist eine dritte Stirnseite 6 und eine vierte Stirnseite 7 auf und ist unabhängig vom ersten Türelement 2 über zumindest ein zweites Verbindungselement 8 im Bereich der vierten Stirnseite 7 mit der Karosserie 1 Kraftfahrzeugs verbunden. Das zweite Verbindungselement 8 ist dabei an einer ersten Drehachse 9 an der Karosserie 1 des Kraftfahrzeugs drehbar gelagert und das zweite Türelement 3 ist an einer von der ersten Drehachse 9 verschiedenen zweiten Drehachse 10 am zweiten Verbindungselement 8 drehbar gelagert.

In der dargestellten Ausführungsform ist das erste Türelement 2 ist im Bereich der ersten Stirnseite 4 über das erste Verbindungselement mit der A-Säule der Karosserie 1 verbunden. Das zweite Türelement 3 ist im Bereich der vierten Stirnseite 7 über das zweite Verbindungselement 8 mit der C-Säule der Karosserie verbunden.

Das zweite Verbindungselement 8, das das zweite Türelement 3 mit der Karosserie 1 verbindet, ist U-förmig ausgeführt und durch eine erste Säule 14 der Karosserie 1, insbesondere die C-Säule der Karosserie 1, des Kraftfahrzeuges geführt.

Die Karosserie 1 des Kraftfahrzeugs weist keine B-Säule auf. Die zweite Stirnseite 5 des ersten Türelements 2 und die dritte Stirnseite 6 des zweiten Türelements 3 treffen in einem Bereich der Karosserie 1 des Kraftfahrzeugs aufeinander in dem üblicherweise eine B-Säule angeordnet ist.

An der zweiten Stirnseite 5 des ersten Türelements 2 ist ein erster Fanghaken 12 angeordnet und an der dritten Stirnseite 6 des zweiten Türelements 3 ist ein zweiter Fanghaken 13 angeordnet.

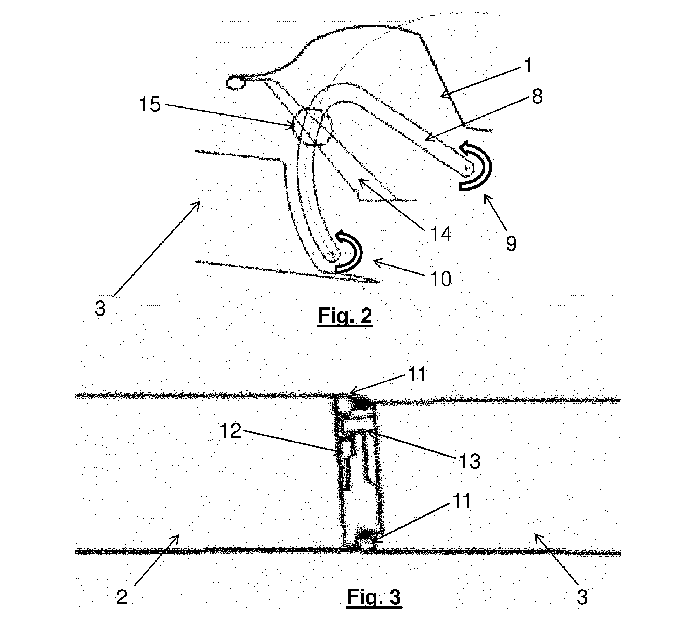

Um eine möglichst dichte und lösbare Verbindung zwischen der zweiten Stirnseite 5 und der dritten Stirnseite 6 zu erzielen ist erfindungsgemäß an der zweiten Stirnseite 5 des ersten Türelements 2 und/oder der dritten Stirnseite 6 des zweiten Türelements 3 zumindest eine vertikale Dichtung 11 vorgesehen. In Fig. 1 und Fig. 3 sind zwei vertikale Dichtungen 11 dargestellt, wobei eine der Dichtungen 11 nahe der Türaußenseite verläuft und die zweite nahe der Türinnenseite verläuft.

Fig. 2 zeigt eine schematische Draufsicht der Verbindungsstelle des zweiten Türelements 3 über das zweite Verbindungselement 8 an die Karosserie 1. In dieser Darstellung wird durch die dargestellten Pfeile die Drehrichtung der ersten Drehachse 9 und der zweiten Drehachse 10 während des Öffnens des zweiten Türelements 3 gezeigt. In dieser Figur ist eine U-ähnliche Form des zweiten Verbindungselements 8 erkennbar.

Das zweite Verbindungselement 8 ist bevorzugt so gestaltet, dass bei Drehung des zweiten Verbindungselements 8 um die erste Drehachse 9 der radiale Abstand zwischen der ersten Drehachse 9 und dem Durchtritt 15 des zweiten Verbindungselements 8 durch die erste Säule 14 annähernd gleich bleibt.

Um das zweite Verbindungselement 8 abzustützen ist es im Bereich des Durchtritts 15 des zweiten Verbindungselements 8 durch die erste Säule 14 der Karosserie 1 gelagert. Die Lagerung erfolgt vorzugsweise durch ein Rollenlager oder Gleitlager.

Das zweite Verbindungselement 8 ist erfindungsgemäß an einer ersten Drehachse 9 an der Karosserie 1 des Kraftfahrzeugs drehbar gelagert und das zweite Türelement 2 ist an einer von der ersten Drehachse 9 verschiedenen zweiten Drehachse 10 am zweiten Verbindungselement 8 drehbar gelagert, wobei die Drehung des zweiten Verbindungselements 8 um die erste Drehachse 9 und/oder die zweite Drehachse 10 mechanisch, hydraulisch, pneumatisch und/oder elektrisch erfolgen kann.

Fig. 3 zeigt eine schematische Draufsicht des Bereichs der zweiten Stirnseite 5 des ersten Türelements 2 und der dritten Stirnseite 6 des zweiten Türelements 3 in geschlossener Position der beiden Türelemente "erstes Türelement" 2 und "zweites Türelement" 3.

Darüber hinaus sind an der zweiten Stirnseite 5 der erste Fanghaken 12 und an der dritten Stirnseite 6 der zweite Fanghaken 13, sowie die zwei vertikalen Dichtungen 11 dargestellt. Eine der beiden Dichtungen 11 verläuft nahe der Türaußenseite und die zweite Dichtung verläuft nahe der Türinnenseite.

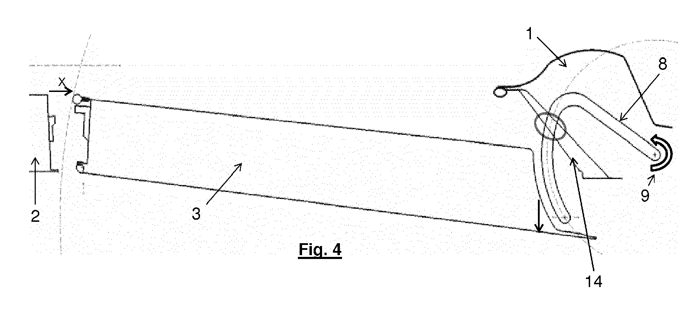

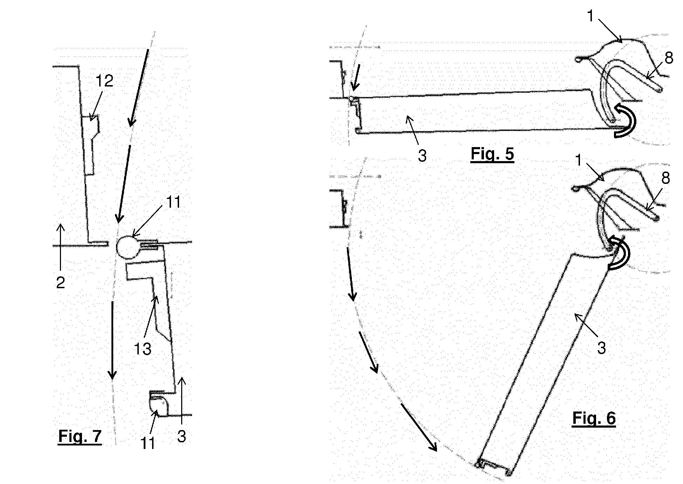

Fig. 4 bis Fig. 7 zeigen eine schematische, fragmentarische Draufsicht des erfindungsgemäßen Kraftfahrzeugs und die Öffnungskinematik des zweiten Türelements 3 unabhängig vom ersten Türelement 2. Die Schließkinematik ist nicht dargestellt wird jedoch im Folgenden detailliert beschrieben.

Das zweite Türelement 3 wird beim Öffnen und/oder Schließen des zweiten Türelements 3 in zumindest einer Führungsschiene 16 geführt. Die zumindest eine Führungsschiene 16 ist an der Karosserie 1 ausgebildet und ermöglicht eine flexibel definierbare Bewegung entlang der Längsseite der Karosserie 1 des Kraftfahrzeuges, insbesondere eine eng am Fahrzeug geführte Bewegung der dritten Stirnseite 6 des zweiten Türelements 3 beim Öffnen und/oder Schließen des zweiten Türelements 3. Die Bewegung wird hierbei durch die Geometrie der Führungsschiene 16 bestimmt.

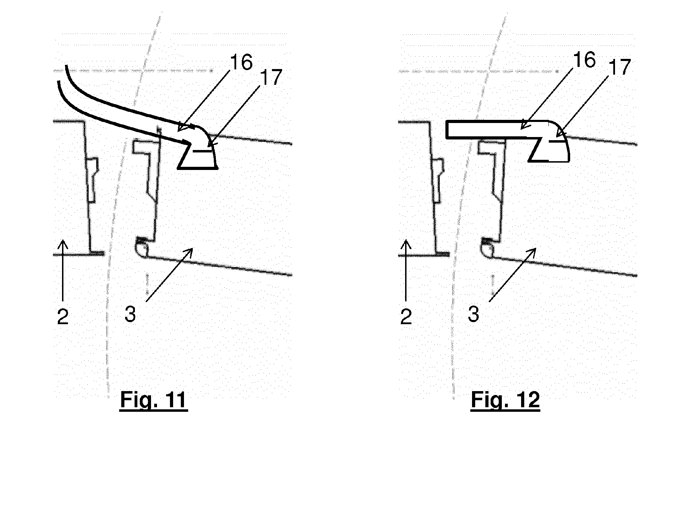

In Fig. 11 und Fig. 12 sind zwei mögliche Ausführungsformen für die zumindest einen Führungsschiene 16 im Bereich der dritten Stirnseite 6 dargestellt. In Fig. 12 ist die Führungsschiene 16 linear ausgebildet um eine platzsparende Führung des zweiten Türelements 3 entlang der Längsseite der Karosserie 1 des Kraftfahrzeugs zu gewährleisten. In Fig. 11 zeigt eine exemplarische Darstellung einer gebogenen Geometrie der Führungsschiene 16. Auch S-förmige oder anders gebogene Geometrien der Führungsschiene 16 sind möglich, jedoch in den Figuren nicht dargestellt.

In Fig. 11 und Fig. 12 ist am ausgeweiteten Querschnitt der Führungsschiene 16 zumindest ein Einrastelement 17, insbesondere eine mechanische Einrastklappe, angeordnet, in das der Einrastbolzen des zweiten Türelements 3 einrastet.

Beim Öffnen des zweiten Türelements 3 erfolgt zuerst eine Drehung des zweiten Verbindungselements 8 um die erste Drehachse 9, wobei das zweite Türelement 3 im Bereich der dritten Stirnseite 6 in der zumindest einen Führungsschiene 16 geführt wird. Nach der Drehung des zweiten Verbindungselements 8 um die erste Drehachse 9 erfolgt eine Drehung des zweiten Türelements 3 um die zweite Drehachse 10.

Beim Schließen des zweiten Türelements 3 erfolgt zuerst eine Drehung des zweiten Türelements 3 um die zweite Drehachse 10. Nach Drehung des zweiten Türelements 3 um die zweite Drehachse 10 erfolgt eine Drehung des zweiten Verbindungselements 8 um die erste Drehachse 9, wobei das zweite Türelement 3 im Bereich der dritten Stirnseite 6 in der zumindest einen Führungsschiene 16 geführt wird.

Die Drehung des zweiten Verbindungselements 8 um die erste Drehachse 9 erfolgt um einen Winkel von 20° bis 40°, vorzugsweise etwa 30°, wobei es zu einer Verschiebung des zweiten Türelements 3 von 30 mm bis 70 mm, vorzugsweise 50 mm, in der zumindest einen Führungsschiene 16 kommt.

Beim Schließen wird nach der Drehung des zweiten Türelements 3 um die zweite Drehachse 10 das zweite Türelement 3 in die zumindest eine Führungsschiene 16 geführt.

Beim Schließen des zweiten Türelements 3 nach der Drehung des zweiten Verbindungselements 8 um die erste Drehachse 9 trifft das zweite Türelement 3 mit der dritten Stirnseite 6 im Bereich der sonst üblichen B-Säule der Karosserie des Kraftfahrzeugs auf die zweite Stirnseite 5 des ersten Türelements 2. Dies erfolgt insbesondere über eine elektronische Zuziehfunktion.

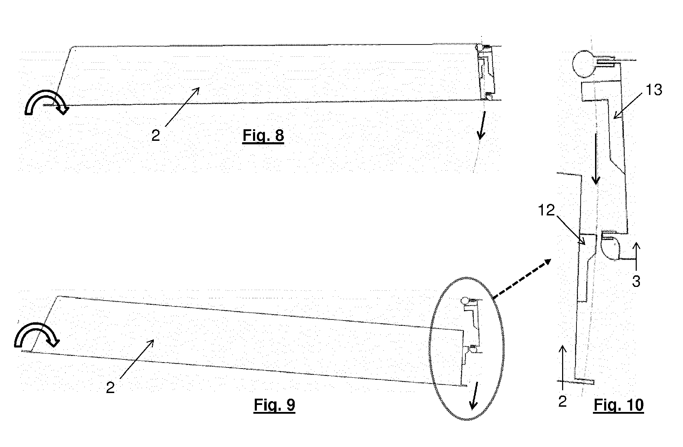

Fig. 8 bis Fig. 10 zeigen eine schematische, fragmentarische Draufsicht des erfindungsgemäßen Kraftfahrzeugs und die Öffnungskinematik des ersten Türelements 2 unabhängig vom zweiten Türelement 3. Die Fanghaken 12, 13 sind, wie insbesondere in der Detaildarstellung Fig. 10 gut ersichtlich, so geformt und angeordnet, dass das erste Türelement 2 auch bei geschlossenem zweiten Türelement 3 geöffnet und geschlossen werden kann.

Die Fanghaken 12, 13 sind somit so geformt, dass das erste Türelement 2 unabhängig von der Position des zweiten Türelementes 3 geöffnet werden kann (Fig. 9 und/oder Fig. 10).

### Bezugszeichenliste

- 1: Karosserie
- 2: Erstes Türelement
- 3: Zweites Türelement
- 4: Erste Stirnseite
- 5: Zweite Stirnseite
- 6: Dritte Stirnseite
- 7: Vierte Stirnseite
- 8: Zweites Verbindungselement
- 9: Erste Drehachse
- 10: Zweite Drehachse
- 11: Dichtung
- 12: Erster Fanghaken
- 13: Zweiter Fanghaken
- 14: Erste Säule
- 15: Durchtritt
- 16: Führungsschiene
- 17: Einrastelement

## Patentansprüche

1. Kraftfahrzeug umfassend eine Karosserie (1), ein erstes Türelement (2) und ein zweites Türelement (3), wobei das erste Türelement (2) eine erste Stirnseite (4) und eine zweite Stirnseite (5) aufweist und das zweite Türelement (3) eine dritte Stirnseite (6) und eine vierte Stirnseite (7) aufweist, wobei das erste Türelement (2) im Bereich der ersten Stirnseite (4) über zumindest ein erstes Verbindungselement mit der Karosserie (1) verbunden ist und das zweite Türelement (3) im Bereich der vierten Stirnseite (7) über zumindest ein zweites Verbindungselement (8) mit der Karosserie (1) verbunden ist, wobei das zweite Verbindungselement (8) an einer ersten Drehachse (9) an der Karosserie (1) des Kraftfahrzeugs drehbar gelagert ist und das zweite Türelement (3) an einer von der ersten Drehachse (9) verschiedenen zweiten Drehachse (10) am zweiten Verbindungselement (8) drehbar gelagert ist,
**dadurch gekennzeichnet, dass** an der Karosserie (1) im Bereich der dritten Stirnseite (6) des zweiten Türelements (3) zumindest eine Führungsschiene (16) angeordnet ist, so dass beim Öffnen und/oder Schließen des zweiten Türelements (3) der Bereich der dritten Stirnseite (6) des zweiten Türelements (3) in der Führungsschiene (16) geführt ist.

2. Kraftfahrzeug nach Anspruch 1,
**dadurch gekennzeichnet, dass** das erste Türelement (2) im Bereich der ersten Stirnseite (4) an der Ober- und/oder Unterkante des ersten Türelements (2) über das zumindest eine erste Verbindungselement mit der Karosserie (1) verbunden ist und/oder das zweite Türelement (3) im Bereich der vierten Stirnseite (7) an der Ober- und/oder Unterkante des zweiten Türelements (3) über das zumindest eine zweite Verbindungselement (8) mit der Karosserie (1) verbunden ist.

3. Kraftfahrzeug nach einem der Ansprüche 1 oder 2,
**dadurch gekennzeichnet, dass** die zumindest eine Führungsschiene (16) zur Führung des zweiten Türelements (3) ausgebildet ist, wobei die Führungskinematik des zweiten Türelementes (3) durch die Geometrie der Führungsschiene bestimmt wird.

4. Kraftfahrzeug nach Anspruch 3,
**dadurch gekennzeichnet, dass** die zumindest eine Führungsschiene (16) zur linearen Führung des zweiten Türelements (3) ausgebildet ist oder zumindest eine Biegung aufweist.

5. Kraftfahrzeug nach einem der Ansprüche 1 bis 4,
**dadurch gekennzeichnet, dass** das erste Türelement (2) im Bereich der ersten Stirnseite (4) über das erste Verbindungselement mit der A-Säule der Karosserie (1) verbunden ist und/oder das zweite Türelement (3) im Bereich der vierten Stirnseite (7) über das zweite Verbindungselement (8) mit der C-Säule (14) der Karosserie (1) verbunden ist.

6. Kraftfahrzeug nach einem der vorhergehenden Ansprüche,
**dadurch gekennzeichnet, dass** an der zweiten Stirnseite (5) des ersten Türelements (2) und/oder der dritten Stirnseite (6) des zweiten Türelements (3) zumindest eine vertikale Dichtung (11) angeordnet ist.

7. Kraftfahrzeug nach einem der vorhergehenden Ansprüche,
**dadurch gekennzeichnet, dass** an der zweiten Stirnseite (5) des ersten Türelements (2) ein erster Fanghaken (12) angeordnet ist und an der dritten Stirnseite (6) des zweiten Türelements (3) zweiter Fanghaken (13) angeordnet ist.

8. Kraftfahrzeug nach einem der vorhergehenden Ansprüche,
**dadurch gekennzeichnet, dass** das zweite Verbindungselement (8) eine U-ähnliche Form aufweist.

9. Kraftfahrzeug nach einem der vorhergehenden Ansprüche,
**dadurch gekennzeichnet, dass** das zweite Verbindungselement (8) durch eine erste Säule (14) der Karosserie (1), insbesondere die C-Säule der Karosserie (1), des Kraftfahrzeuges geführt ist.

10. Kraftfahrzeug nach Anspruch 9,
**dadurch gekennzeichnet, dass** im Bereich des Durchtritts (15) des zweiten Verbindungselements (8) durch die erste Säule (14) der Karosserie (1) das zweite Verbindungselement (8) gelagert ist, wobei die Lagerung vorzugsweise durch ein Rollenlager oder Gleitlager erfolgt.

11. Kraftfahrzeug nach Anspruch 9 oder 10,
**dadurch gekennzeichnet, dass** bei Drehung des zweiten Verbindungselements (8) um die erste Drehachse (9) der radiale Abstand zwischen der ersten Drehachse (9) und dem Durchtritt des zweiten Verbindungselements (8) durch die erste Säule (14) annähernd gleich bleibt.

12. Kraftfahrzeug nach einem der vorhergehenden Ansprüche,
**dadurch gekennzeichnet, dass** die Drehung des zweiten Verbindungselements (8) um die erste Drehachse (9) und/oder die zweite Drehachse (10) automatisiert, insbesondere mechanisch, hydraulisch, pneumatisch und/oder elektrisch, durchführbar ist.

13. Kraftfahrzeug nach einem der vorhergehenden Ansprüche,
**dadurch gekennzeichnet, dass** beim Öffnen des zweiten Türelements (3) eine Drehung des zweiten Verbindungselements (8) um die erste Drehachse (9) erfolgt, wobei das zweite Türelement (3) im Bereich der dritten Stirnseite (6) in der zumindest einen Führungsschiene (16) geführt wird, wobei nach der Drehung des zweiten Verbindungselements (8) um die erste Drehachse (9) eine Drehung des zweiten Türelements (3) um die zweite Drehachse (10) erfolgt.

14. Kraftfahrzeug nach einem der vorhergehenden Ansprüche,
**dadurch gekennzeichnet, dass** beim Schließen des zweiten Türelements (3) eine Drehung des zweiten Türelements (3) um die zweite Drehachse (10) erfolgt, wobei nach Drehung des zweiten Türelements (3) um die zweite Drehachse (10) eine Drehung des zweiten Verbindungselements (8) um die erste Drehachse (9) erfolgt, wobei das zweite Türelement (3) im Bereich der dritten Stirnseite (6) in der zumindest einen Führungsschiene (16) geführt wird.

15. Kraftfahrzeug nach Anspruch 14 ,
**dadurch gekennzeichnet, dass** beim Schließen des zweiten Türelements (3) nach der Drehung des zweiten Türelements (3) um die zweite Drehachse (10) das zweite Türelement (3) in die zumindest eine Führungsschiene einrastet.

16. Kraftfahrzeug nach Anspruch 13 oder 14,
**dadurch gekennzeichnet, dass** beim Schließen des zweiten Türelements (3) nach der Drehung des zweiten Verbindungselements (8) um die erste Drehachse (9) das zweite Türelement (3) mit der dritten Stirnseite (6) im Bereich der zweiten Stirnseite (5) des ersten Türelements (2) schließt, insbesondere über eine automatisierte, insbesondere elektronische Zuziehfunktion.

17. Kraftfahrzeug nach einem der vorhergehenden Ansprüche,
**dadurch gekennzeichnet, dass** die Drehung des zweiten Verbindungselements (8) um die erste Drehachse (9) um einen Winkel von 20° bis 40°, vorzugsweise etwa 30°, erfolgt, wobei eine Verschiebung des zweiten Türelements (3) von 30 mm bis 70 mm, vorzugsweise 50 mm, in der zumindest einen Führungsschiene erfolgt.
